# EUROPEAN PATENT SPECIFICATION

(11) **EP 1 553 565 B1**
(45) Date of publication and mention of the grant of the patent: **22.10.2008**
(21) Application number: 03816161.8
(22) Date of filing: 05.03.2003
(51) Int. Cl.: G11B 5/851, G11B 5/84, G11B 5/738, G11B 5/65, G11B 5/66

(54) **Magnetic recording medium and a method for its manufacture**
Magnetisches Aufzeichnungsmedium und Verfahren zu seiner Herstellung
Support d'enregistrement magnétique et procédé pour sa fabrication

(43) Date of publication of application: 13.07.2005
(73) Proprietor: FUJITSU LIMITED, Kawasaki-shi, Kanagawa 211-8588 (JP)
(72) Inventor: MUKAI, Ryoichi, c/o Fujitsu Limited, Kawasaki-shi, Kanagawa 211-8588 (JP)
(74) Representative: Fenlon, Christine Lesley
(86) International application number: PCT/JP2003/002552
(87) International publication number: WO 2004/079724

(56) References cited:
- WO-A-01/52248
- WO-A-03/009280
- JP-A- 6 204 137
- JP-A- 11 016 838
- JP-A- 62 192 047
- JP-A- 2002 203 306
- JP-A- 2002 203 814
- US-A- 5 766 727
- US-A1- 2002 048 694

## Description

### TECHNICAL FIELD

The present invention relates to a multilayered structure film often utilized for a magnetic recording layer of a magnetic recording medium such as a hard disk (HD), for example, and to a method of making the same.

### BACKGROUND ART

In general, a magnetic recording medium includes a controlling underlayer extending on the surface of a substrate by a predetermined thickness, and a magnetic recording layer extending on the surface of the controlling underlayer by a predetermined thickness. The controlling underlayer serves to establish the orientation of the crystals in a predetermined direction in the magnetic recording layer. The axis of easy magnetization is thus aligned in a certain direction.

Sputtering is employed to form the controlling underlayer and the magnetic recording layer. The substrate is subjected to heat treatment prior to the execution of the sputtering. Metallic atoms for the controlling underlayer are deposited on the surface of the heated substrate. The heat serves to form crystal grains during the deposition of the metallic atoms. Metallic atoms for the magnetic recording layer are then deposited on the surface of the controlling underlayer. The magnetic crystal grains grow on the controlling underlayer based on the epitaxy.

The deposition of the metallic atoms is kept on the heated substrate until the controlling layer or the magnetic recording layer reaches a predetermined thickness. The applied heat causes the crystal grains to irregularly accrete in the controlling underlayer or the magnetic recording layer, so that the individual crystal grains get larger in size based on accretion. The magnetic recording layer cannot enjoy uniformity and reduction in size of the magnetic crystal grains.

### DISCLOSURE OF THE INVENTION

It is accordingly an object of the present invention to provide a multilayered structure film contributing to establishment of uniformity and reduction in size of crystal grains.

According to a first aspect of the present invention, there is provided a method of making a magnetic recording medium characterized by comprising: depositing first atoms on a surfaceofacontrollinglayer, including crystal grains oriented in a predetermined direction, in a chamber; keeping the chamber at room temperature during deposition of the first atoms; subjecting the first atoms to heat treatment in the chamber after the deposition of the first atoms so as to form a first polycrystalline layer including crystal grains whose orientation is aligned in a predetermined direction, the first atoms being specific atoms or forming an alloy including Co and Cr; depositing second atoms on a surface of the first polycrystalline layer in the chamber so as to form a second polycrystalline layer having a thickness larger than that of the first polycrystalline layer, the second polycrystalline layer including crystal grains having grown from individual crystal grains of the first crystalline layer based on epitaxy, the second atoms being the specific atoms or forming the alloy including Co and Cr; and keeping a vacuum condition in the chamber between the deposition of the first atoms and deposition of the second atoms.

The method enables a reliable prevention of migration of the first atoms during the deposition of the first atoms. Since the first atoms are only allowed to deposit at a smaller amount relative to the overall thickness of the multilayered structure film, fine and uniform crystal grains can be established in the first polycrystalline layer. The deposition of the second atoms is then realized to a predetermined thickness without inducing migration. Fine and uniform crystal grains can also be established in the second polycrystalline layer. Enlargement of the crystal grains can reliably be avoided in this manner.

The method may further comprise: depositing third atoms on a surface of the second crystalline layer in the chamber; keeping the chamber at room temperature during deposition of the third atoms; subjecting the third atoms to heat treatment after deposition of the third atoms so as to from a third crystalline layer; depositing fourth atoms on a surface of the third polycrystalline layer so as to form a fourth polycrystalline layer having a thickness larger than that of the third polycrystalline layer, the fourth polycrystalline layer includes crystal grains having grown from the individual crystal grains of the third crystalline layer based on epitaxy, the third and fourth atoms forming an alloy including Co and Cr; and maintaining a vacuum condition in the chamber between deposition of the third atoms and deposition of the fourth atoms; wherein said third polycrystalline layer includes crystal grains having grown from the individual crystal grains of the second crystalline layer based on epitaxy.

The method enables a reliable prevention of migration of the third atoms during the deposition of the third atoms. Since the third atoms are only allowed to deposit at a smaller amount relative to the overall thickness of the multilayered structure film, fine and uniform crystal grains can be established in the third polycrystalline layer. The deposition of the fourth atoms is then realized to a predetermined thickness without inducing migration. Fine and uniform crystal grains can also be established in the fourth polycrystalline layer. Enlargement of the crystal grains can reliably be avoided in this manner.

The controlling layer serves to reliably align the orientation of the crystal grains in the first and second polycrystalline layers.

US 2002/0048694A1 discloses a method of making a magnetic recording medium in which first and second CoPt layers are sequentially formed on a Cr layer, after which the Cr layer and the first CoPt layer are subjected to heat treatment. Such heat treatment serves to diffuse the Cr atoms within the Cr layer into the CoPt layer, but does not contribute to the establishment of crystal grains in the CoPt layer.

According to a second aspect of the present invention, there is provided a magnetic recording medium characterized by comprising: a controlling layer including crystal grains oriented in a predetermined direction; a first non-magnetic polycrystalline layer including crystal grains, consisting of Ti atoms, adjacent to each other on a surface of the controlling layer, an orientation of the crystal grains being aligned in a predetermined direction; and a second non-magnetic polycrystalline layer including crystal grains, consisting of Ti atoms, having grown from the individual crystal grains of the first non-magnetic polycrystalline layer based on epitaxy, said second non-magnetic polycrystalline layer extending on a surface of the first non-magnetic polycrystalline layer with a thickness larger than that of the first non-magnetic polycrystalline layer.

The controlling layer serves to reliably establish the alignment of the crystal grains in the first polycrystalline layer. Since the crystal grains of the second polycrystalline layer grow from the individual crystal grains in the first polycrystalline layer, the orientation of the crystal grains can reliably be set in a predetermined direction in the second polycrystalline layer.

The medium may further comprise a magnetic layer extending on the surface of the second non-magnetic polycrystalline layer.

The magnetic recording medium enables establishment of fine and uniform crystal grains in the first and second non-magnetic polycrystalline layers. In addition, the first and second non-magnetic polycrystalline layers are allowed to have a sufficient thickness. The axis of easy magnetization can thus reliably be aligned in the perpendicular direction perpendicular to the surface of the substrate in the magnetic layer. A higher signal-to-noise (S/N) ratio can be obtained.

The magnetic layer may comprise a first magnetic polycrystalline layer made of third atoms and including crystal grains adjacent to each other on the surface of the second non-magnetic polycrystalline underlayer; and a second magnetic polycrystalline layer made of fourth atoms of an element or elements of the third atoms, said second magnetic polycrystalline layer extending on a surface of the first magnetic polycrystalline layer with a thickness larger than that of the first magnetic polycrystalline layer; wherein said second magnetic polycrystalline layer includes crystal grains having grown continuously from the crystal grains of the first magnetic polycrystalline layer.

The magnetic recording medium enables establishment of fine and uniform crystal grains in the first and second magnetic polycrystalline layers. In addition, the first and second magnetic polycrystalline layers are allowed to have a sufficient thickness. The axis of easy magnetization can thus reliably be aligned in the perpendicular direction perpendicular to the surface of the substrate in the first and second magnetic polycrystalline layers. A higher signal-to-noise (S/N) ratio can be obtained.

Alternatively, according to a third aspect of the present invention, a magnetic recording medium comprises: a magnetic recording medium comprising: a non-magnetic polycrystalline underlayer including crystal grains whose orientation is aligned in a predetermined direction; a first magnetic polycrystalline layer including crystal grains, made of an alloy including Co and Cr, adjacent to each other on a surface of the non-magnetic polycrystalline underlayer; and a second magnetic polycrystalline layer including crystal grains, made of the alloy, having grown from the crystal grains of the first magnetic polycrystalline layer based on epitaxy, said second magnetic polycrystalline layer extending on a surface of the first magnetic polycrystalline layer with a thickness larger than that of the first magnetic polycrystalline layer.

The magnetic recording medium of this type enables establishment of fine and uniform crystal grains in the first and second magnetic polycrystalline layers in the manner as described above. A higher signal-to-noise (S/N) ratio can likewise be obtained.

The aforementioned magnetic recording medium may be a so-called perpendicular magnetic recording medium, for example. The axis of easy magnetization may be aligned in the perpendicular direction perpendicular to the surface of the substrate in the aforementioned magnetic layer or first and second magnetic polycrystalline layers. The perpendicular magnetic recording medium may further include a non-magnetic layer receiving the non-magnetic polycrystalline underlayer; and a magnetic underlayer receiving the non-magnetic layer, the magnetic underlayer having the axis of easy magnetization in a direction parallel to the surface of the non-magnetic polycrystalline underlayer.

### BRIEF DESCRIPTION OF THE DRAWINGS

Fig. 1 is a plan view schematically illustrating the structure of a hard disk drive as an example of a magnetic recording medium drive or storage unit.

Fig. 2 is an enlarged vertical sectional view of a magnetic recording disk employed in the hard disk drive.

Fig. 3 is an enlarged vertical sectional view of the magnetic recording disk in detail.

Fig. 4 is an enlarged partial sectional view of the magnetic recording disk for schematically illustrating the process of forming a magnetic underlayer on the surface of a substrate.

Fig. 5 is an enlarged partial sectional view of the magnetic recording disk for schematically illustrating the process of forming a controlling layer on the surface of the magnetic underlayer.

Fig. 6 is an enlarged partial sectional view of the magnetic recording disk for schematically illustrating the process of forming a first non-magnetic polycrystalline underlayer on the surface of the controlling layer.

Fig. 7 is an enlarged partial sectional view of the magnetic recording disk for schematically illustrating the process of forming a second non-magnetic polycrystalline underlayer on the surface of the first non-magnetic polycrystalline underlayer.

Fig. 8 is an enlarged partial sectional view of the magnetic recording disk for schematically illustrating the process of forming a first magnetic polycrystalline layer on the surface of the second non-magnetic polycrystalline underlayer.

Fig. 9 is an enlarged partial sectional view of the magnetic recording disk for schematically illustrating the process of forming a second magnetic polycrystalline layer on the surface of the first magnetic polycrystalline layer.

Fig. 10 is a graph illustrating the orientation of crystal grains based on X-ray diffraction.

Fig. 11 is a graph illustrating the relationship between the thickness of the first non-magnetic polycrystalline underlayer and the characteristic of the magnetic recording disk.

Fig. 12 is a graph illustrating the relationship between the thickness of the second non-magnetic polycrystalline underlayer and the characteristic of the magnetic recording disk.

Fig. 13 is a graph illustrating the orientation of crystal grains based on X-ray diffraction.

Fig. 14 is a graph illustrating the relationship between the thickness of the first magnetic polycrystalline layer and the characteristic of the magnetic recording disk.

Fig. 15 is a graph illustrating the orientation of crystal grains based on X-ray diffraction.

Fig. 16 is a graph illustrating the orientation of crystal grains based on X-ray diffraction.

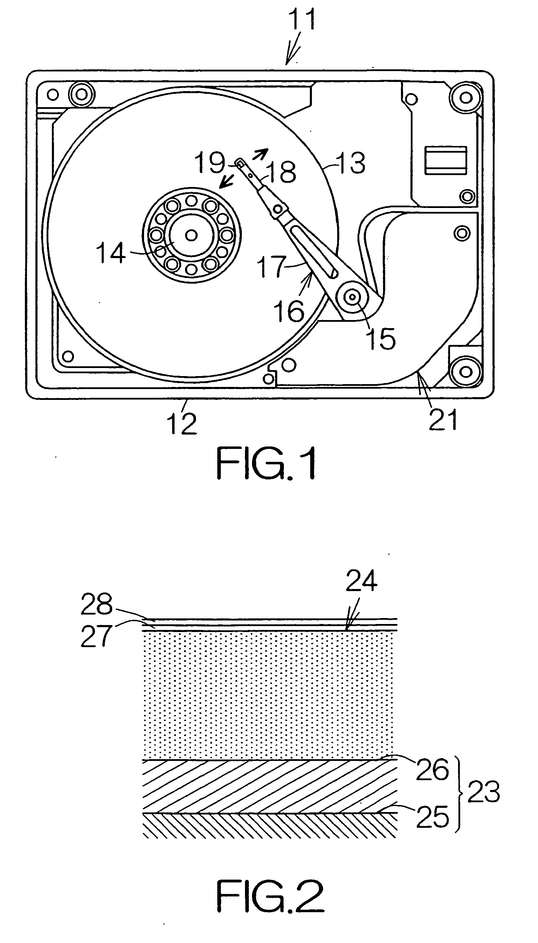

Fig. 1 schematically illustrates the interior structure of a hard disk drive (HDD) 11 as an example of a magnetic recording medium drive or storage device. The HDD 11 includes a box-shaped main enclosure 12 defining an inner space of a flat parallelepiped, for example. At least one magnetic recording disk 13 is incorporated in the inner space within the main enclosure 12. The magnetic recording disk or disks is formed as a so-called perpendicular magnetic recording medium. The magnetic recording disk or disks 13 is mounted on the driving shaft of a spindle motor 14. The spindle motor 14 is allowed to drive the magnetic recording disk 13 for rotation at a higher revolution rate such as 7,200rpm, 10,000rpm, or the like, for example. A cover, not shown, is coupled to the main enclosure 12 so as to define the closed inner space between the main enclosure 12 and itself.

A head actuator 16 is mounted on a vertical support shaft 15 in the inner space of the main enclosure 12. The head actuator 16 includes rigid actuator arms 17 extending in the horizontal direction from the vertical support shaft 15, and an elastic head suspension 18 fixed to the tip end of the actuator arm 17 so as to extend forward from the actuator arm 17. As conventionally known, a flying head slider 19 is cantilevered at the tip end of the head suspension 18 through a gimbal spring, not shown. The head suspension 18 serves to urge the flying head slider 19 toward the surface of the magnetic recording disk 13. When the magnetic recording disk 13 rotates, the flying head slider 19 is allowed to receive airflow generated along the rotating magnetic recording disk 13. The airflow serves to generate a lift on the flying head slider 19. The flying head slider 19 is thus allowed to keep flying above the surface of the magnetic recording disk 13 during the rotation of the magnetic recording disk 13 at a higher stability established by the balance between the lift and the urging force of the head suspension 18.

A read/write magnetic transducer or head element, not shown, is mounted on the flying head slider 19 in a conventional manner. The read/write magnetic transducer includes a read head element and a write head element. The read head element may include a giant magnetoresistive (GMR) element or a tunnel-junction magnetoresistive (TMR) element designed to discriminate magnetic bit data on the magnetic recording disk 13 by utilizing variation in the electric resistance of a spin valve film or a tunnel-junction film, for example. The write head element may include a single pole magnetic head designed to write magnetic bit data into the magnetic recording disk 13 by utilizing a magnetic field induced at a thin film coil pattern.

When the head actuator 16 is driven to swing about the support shaft 15 during the flight of the flying head slider 19, the flying head slider 19 is allowed to cross the recording tracks defined on the magnetic recording disk 13 in the radial direction of the magnetic recording disk 13. This radial movement serves to position the read/write magnetic transducer on the flying head slider 19 right above a target recording track on the magnetic recording disk 13. In this case, a power source 21 such as a voice coil motor (VCM) can be employed to realize the swinging movement of the head actuator 16, for example. As conventionally known, in the case where two or more magnetic recording disks 13 are incorporated within the inner space of the main enclosure 12, a pair of the actuator arm 17 and a pair of the head slider 19 are disposed between the adjacent magnetic recording disks 13.

Fig. 2 illustrates in detail the structure of the magnetic recording disk 13. The magnetic recording disk 13 includes a substrate 23 as a support member, and multilayered structure films 24 extending over the front surface and back surface (not shown) of the substrate 23, respectively. The substrate 23 may comprise a disk-shaped Si body 25 and amorphous SiO₂ laminations 26 covering over the front surface and back surface (not shown) of the Si body 25, for example. Alternatively, a glass or aluminum substrate may be employed in place of the substrate 23 of the aforementioned type. Magnetic information data is recorded in the multilayered structure films 24. The multilayered structure film 24 is covered with a protection overcoat 27 and a lubricating agent film 28. A carbon material such as diamond-like-carbon (DLC) may be utilized to form the protection overcoat 27. A perfluoropolyether (PFPE) film may be employed as the lubricating agent film 28, for example.

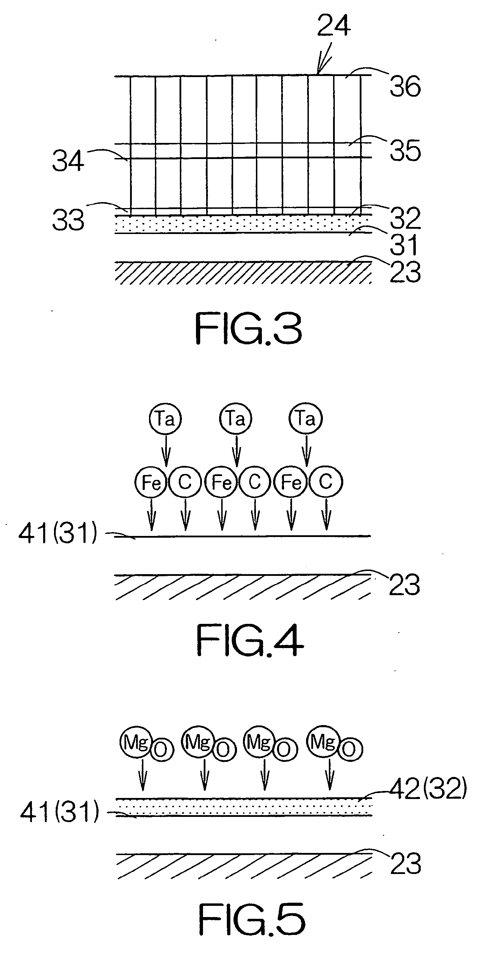

As shown in Fig. 3, the multilayered structure film 24 includes a magnetic underlayer 31 extending over the surface of the substrate 23. The magnetic underlayer 31 is made of a soft magnetic material such as FeTaC, NiFe, or the like. Here, a FeTaC filmhaving a thickness of 300nmapproximately is employed as the magnetic underlayer 31. The axis of easy magnetization is aligned in the planar direction parallel to the surface of the substrate 23 in the magnetic underlayer 31.

A controlling layer 32 extends on the upper surface of the magnetic underlayer 31. The controlling layer 32 includes crystal grains oriented in a predetermined direction. A non-magnetic layer such as a MgO layer may be employed as the controlling layer 32, for example. Here, a MgO layer having a thickness of 16.7nm approximately is employed as the controlling layer 32. The (100) plane is oriented in a predetermined direction in the individual crystal grains of MgO.

The multilayered structure film 24 includes a first non-magnetic polycrystalline underlayer 33 extending on the surface of the controlling layer 32. The first non-magnetic polycrystalline underlayer 33 includes crystal grains adjacent to each other on the controlling layer 32. Here, a Ti layer having a thickness in the range between 0.3nm and 0.4nm approximately may be employed as the first non-magnetic polycrystalline underlayer 33, for example.

The multilayered structure film 24 includes a second non-magnetic polycrystalline underlayer 34 extending on the upper surface of the first non-magnetic polycrystalline underlayer 33. The second non-magnetic polycrystalline underlayer 34 is designed to have a thickness larger than that of the first non-magnetic polycrystalline underlayer 33. The second non-magnetic polycrystalline underlayer 34 includes crystal grains growing from the individual crystal grains of the first non-magnetic polycrystalline underlayer 33 based on the epitaxy. The second non-magnetic polycrystalline underlayer 34 contains at least an element included in the first non-magnetic polycrystalline underlayer 33. Here, a Ti layer having a thickness in the range between 2.0nm and 5.0nm approximately is employed as the second non-magnetic polycrystalline underlayer 34, for example.

A first magnetic polycrystalline layer 35 extends on the upper surface of the second non-magnetic polycrystalline underlayer 34. The first magnetic polycrystalline layer 35 includes crystal grains adjacent to each other on the surface of the second non-magnetic polycrystalline underlayer 34. An alloy containing Co and Cr may be utilized for the first magnetic polycrystalline layer 35, for example. Here, a CoCrPt layer having a thickness in the range between the 0.5nm and 1. 7nm approximately is employed as the first magnetic polycrystalline layer 35. The (001) plane is oriented in a predetermined direction in the individual crystal grains of the first magnetic polycrystalline layer 35.

The multilayered structure film 24 further includes a second magnetic polycrystalline layer 36 extending on the upper surface of the first magnetic polycrystalline layer 35. The second magnetic polycrystalline layer 36 is designed to have a thickness larger than that of the first magnetic polycrystalline layer 35. The second magnetic polycrystalline layer 36 includes crystal grains growing from the individual crystal grains of the first magnetic polycrystalline layer 35 based on the epitaxy. The second magnetic polycrystalline layer 36 contains at least an element included in the first magnetic polycrystalline layer 35. Here, a CoCrPt layer having a thickness in the range between 5.8nm and 7.5nm approximately may be employed as the second magnetic polycrystalline layer 36, for example. The (001) plane is oriented in a predetermined direction in the crystal grains of the second magnetic polycrystalline layer 36. The axis of easy magnetization is thus established in the perpendicular direction perpendicular to the surface of the substrate 23. Magnetic information data is recorded in the first and second magnetic polycrystalline layers 35, 36.

Fine and uniform crystal grains are established in the first and second magnetic polycrystalline layers 35, 36. The fine crystalline grains serve to greatly reduce transition noise between the adjacent recording tracks on the surface of the magnetic recording disk 13. The first and second magnetic polycrystalline layers 35, 36 are still allowed to have a sufficient thickness. The axis of easy magnetization is reliably aligned in the perpendicular direction perpendicular to the surface of the substrate 23 with a higher accuracy. A higher signal-to-noise (S/N) ratio can be obtained.

Next, a detailed description will be made on a method of making the magnetic recording disk 13. First of all, the disk-shaped substrate 23 is prepared. The substrate 23 is set in a sputtering apparatus. A vacuum condition is established in a chamber of the sputtering apparatus. The multilayered structure film 24 is formed on the surface of the substrate 23 in the chamber of the sputtering apparatus. The processes will be described later in detail. The protection overcoat 27 is then formed on the surface of the multilayered structure film 24. Chemical vapor deposition (CVD) may be employed to form the protection overcoat 27. The lubricating agent film 28 is subsequently applied to the surface of the protection overcoat 27. The substrate 23 may be dipped into a solution containing perfluoropolyether, for example.

A FeTaC target is first set in the sputtering apparatus. As shown in Fig. 4, Fe atoms, Ta atoms and C atoms are evolved from the FeTaC target in the chamber in the vacuum condition. Specifically, a so-called radio or high frequency sputtering is effected in the sputtering apparatus. Fe atoms, Ta atoms and C atoms are allowed to deposit on the surface of the substrate 23. The normal or room temperature is kept during the deposition of the atoms in the chamber in this case. The magnetic underlayer 31, namely a FeTaC layer 41 having the thickness of 300nm approximately, is thus formed on the surface of the substrate 23.

As shown in Fig. 5, MgO is subsequently deposited on the surface of the FeTaC layer 41 in the vacuum condition in the sputtering apparatus. The room temperature is kept in the chamber of the sputtering apparatus. The controlling layer 32, namely a MgO layer 42 having the thickness of 16.7nm approximately, is thus formed on the surface of the FeTaC layer 41. Since the room temperature is kept in the chamber during the deposition of the MgO, the (100) plane is aligned in a predetermined direction in the individual non-magnetic crystal grains of the MgO layer 42.

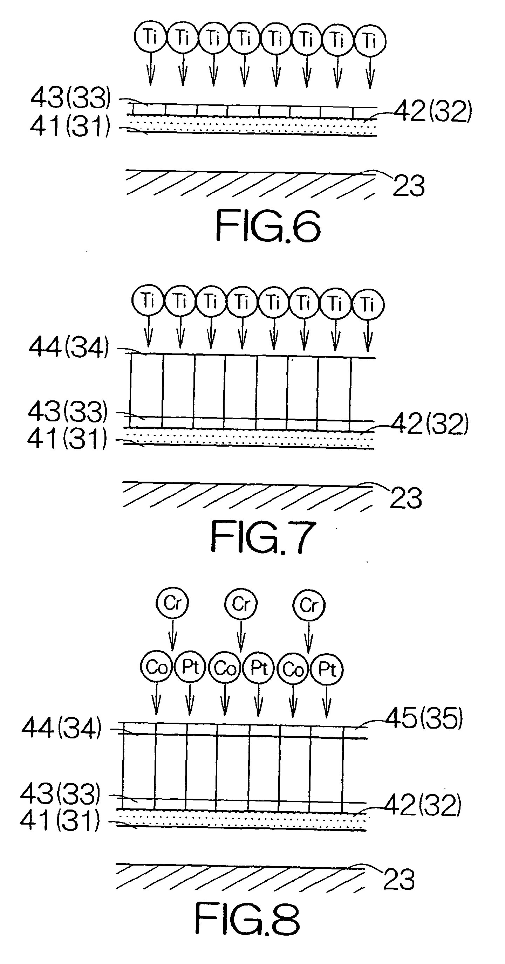

A Ti target is then set in the sputtering apparatus. As shown in Fig. 6, Ti atoms are evolved from the Ti target in the chamber of the sputtering apparatus in the vacuum condition. The Ti atoms are allowed to deposit on the surface of the MgO layer 42. The temperature of the substrate 23 is kept equal to or below 200 degrees Celsius. Accordingly, the room temperature may be kept in the chamber during the deposition of the Ti atoms in this case. Migration of the Ti atoms can thus be prevented on the surface of the substrate 23. A Ti layer 43 having the thickness of 0. 4nm approximately is formed on the surface of the MgO layer 42. Here, crystal grains cannot sufficiently be established in the Ti layer 43.

The Ti layer 43 is subsequently subjected to heat treatment. Heat of 350 degrees Celsius is applied to the Ti layer 43 in the vacuum condition. The application of the heat is maintained for one minute. The substrate 23 may be exposed to infrared radiation in the heat treatment, for example. The applied heat induces crystallization of the Ti layer 43. The MgO layer 42 serves to align the orientation of the crystal grains in a predetermined direction in the Ti layer 43. Fine and uniform crystal grains are established in the Ti layer 43. The first non-magnetic polycrystalline underlayer 33 is in this manner formed on the MgO layer 42.

As shown in Fig. 7, Ti atoms are subsequently evolved from the Ti target in the chamber in the vacuum condition. The Ti atoms are allowed to deposit on the surface of the Ti layer 43 in the same manner as described above. The temperature of the substrate 23 is kept equal to or below 200 degrees Celsius in the aforementioned manner. Fine and uniform crystal grains thus grow from the individual crystal grains in the Ti layer 43 based on the epitaxy. A Ti layer 44 having a thickness of 3.6nm approximately is formed on the surface of the Ti layer 43. The Ti layer 44 may be subjected to heat treatment in a condition similar to that to the Ti layer 43. The second non-magnetic polycrystalline underlayer 34 is in this manner formed to have a thickness larger than that of the first non-magnetic polycrystalline underlayer 33.

A CoCrPt target is thereafter set in the sputtering apparatus. As shown in Fig. 8, Co atoms, Cr atoms and Pt atoms are evolved from the CoCrPt target in the chamber of the sputtering apparatus in the vacuum condition. The Co atoms, Cr atoms and Pt atoms are allowed to deposit on the surface of the Ti layer 44. The temperature of the substrate 23 is kept equal to or below 200 degrees Celsius during the deposition of Co atoms, Cr atoms and Pt atoms in the same manner as described above. Fine and uniform crystal grains thus grow from the individual crystal grains in the Ti layer 44 based on the epitaxy. A CoCrPt layer 45 having a thickness of 1.7nm approximately is in this manner formed on the surface of the Ti layer 44.

The CoCrPt layer 45 is subsequently subjected to heat treatment. Heat of 350 degrees Celsius is applied to the CoCrPt layer 45 in the vacuum condition. The application of the heat is maintained for one minute. The substrate 23 may be exposed to infrared radiation in the heat treatment, for example. The applied heat promotes the crystallization of the CoCrPt layer 45. Fine and uniform crystal grains are established in the CoCrPt layer 45. The first magnetic polycrystalline layer 35 is in this manner formed on the Ti layer 44.

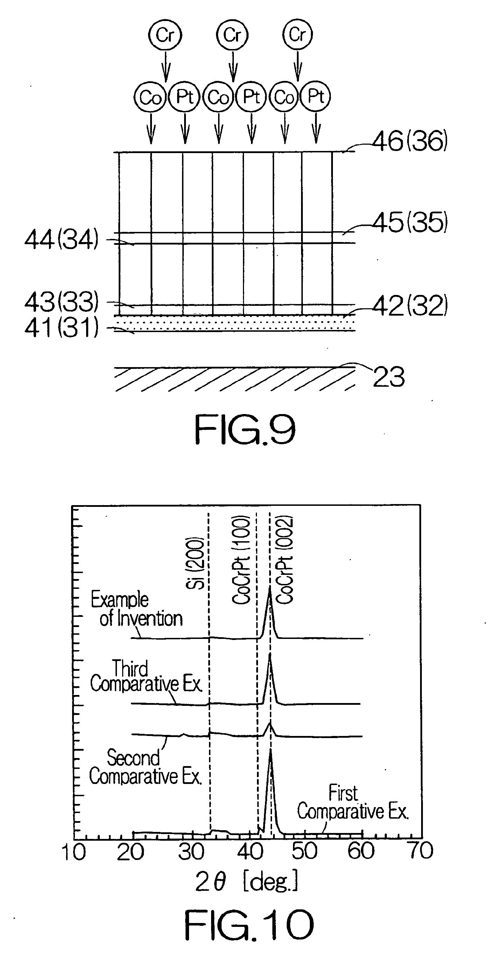

Co atoms, Cr atoms and Pt atoms are then evolved from the CoCrPt target in the chamber of the sputtering apparatus in the vacuum condition, as shown in Fig. 9. The Co atoms, Cr atoms and Pt atoms are allowed to deposit on the surface of the CoCrPt layer 45. The temperature of the substrate 23 is kept equal to or below 200 degrees Celsius during the deposition of Co atoms, Cr atoms and Pt atoms in the same manner as described above. Fine and uniform crystal grains thus grow from the individual crystal grains in the CoCrPt layer 45 based on the epitaxy. A CoCrPt layer 46 having a thickness of 5.8nm approximately is in this manner formed on the surface of the CoCrPt layer 45. The CoCrPt layer 46 may be subjected to heat treatment in a condition similar to that to the CoCrPt layer 45. The second magnetic polycrystalline layer 36 is in this manner formed to have a thickness larger than that of the first magnetic polycrystalline layer 35.

A vacuum condition is kept during a period between the deposition of the first atoms and the deposition of the fourth atoms, namely between the formation of the Ti layer 43 and the formation of the CoCrPt layer 46 in the aforementioned sputtering process. A vacuum condition should be kept at least during a period between the formation of the Ti layer 43 and the formation of the Ti layer 44 in the process of forming the non-magnetic polycrystalline underlayers 33, 34. Likewise, a vacuum condition should be kept at least during a period between the formation of the CoCrPt layer 45 and the formation of the CoCrPt layer 46 in the process of forming the magnetic polycrystalline layers 35, 36.

The method enables a reliable prevention of migration of Ti atoms during the deposition of the Ti layer 43. A smaller thickness can be set for the Ti layer 43 as compared with the overall thickness of the non-magnetic polycrystalline underlayers 33, 34, so that fine and uniform crystal grains can be established in the crystallization of the Ti layer 43. Migration is still suppressed during the deposition of the Ti atoms to establish a larger thickness after the deposition of the Ti layer 43. Fine and uniform crystal grains can thus be established in the Ti layer 44. Enlargement of the crystal grains is thus reliably prevented in the non-magnetic polycrystalline underlayers 33, 34.

The method also enables a reliable prevention of migration of Co atoms, Cr atoms and Pt atoms during the deposition of the CoCrPt layer 45. A smaller thickness can be set for the CoCrPt layer 45 as compared with the overall thickness of the magnetic polycrystalline layers 35, 36, so that fine and uniform crystal grains can be established in the crystallization of the CoCrPt layer 45. Migration is still suppressed during the deposition of the Co atoms, Cr atoms and Pt atoms to establish a larger thickness after the deposition of the CoCrPt layer 45. Fine and uniform crystal grains can thus be established in the CoCrPt layer 46. Enlargement of the crystal grains is thus reliably prevented in the magnetic polycrystalline layers 35, 36. In addition, the Ti layers 43, 44 serve to reliably establish the orientation of the crystal grains aligned in a predetermined direction in the CoCrPt layers 45, 46.

The inventor has examined the characteristics of the first and second non-magnetic polycrystalline underlayers 33, 34. The inventor sequentially formed the Ti layer 43 of a thickness equal to 0.4nm and the Ti layer 44 of a thickness equal to 3. 6nm on the surface of the substrate 23 in accordance with the aforementioned method. A CoCrPt layer of a thickness equal to 7.5nm was formed on the surface of the Ti layer 44. The CoCrPt layer was subjected to heat treatment at 350 degrees Celsius for one minute. A first example was prepared in this manner. The inventor has observed the orientation of crystal grains based on X-ray diffraction.

The inventor prepared first to third comparative examples. A Ti layer of a thickness equal to 3.6nm and a CoCrPt layer of a thickness equal to 7.5nm were sequentially formed on the surface of the substrate 23 through sputtering process in the first comparative example. The CoCrPt layer was subjected to heat treatment at 350 degrees Celsius for one minute. A Ti layer of a thickness equal to 3. 6nm and a CoCrPt layer of a thickness equal to 7.5nm were likewise sequentially formed on the surface of the substrate 23 through sputtering process in the second comparative example. The CoCrPt layer was subjected to heat treatment at 350 degrees Celsius for one minute. In addition, the Ti layer was subjected to heat treatment at 350 degrees Celsius for one minute prior to the deposition of the CoCrPt layer in the second comparative example. A Ti layer of a thickness equal to 3.6nm and a CoCrPt layer of a thickness equal to 7.5nm were likewise sequentially formed on the surface of the substrate 23 through sputtering process in the third comparative example. The CoCrPt layer was subjected to heat treatment at 350 degrees Celsius for one minute. In addition, the substrate 23 was subjected to heat treatment at 350 degrees Celsius for one minute prior to the deposition of the Ti layer in the third comparative example. The orientation of crystal grains was observed in the CoCrPt layers of the first to third comparative examples based on X-ray diffraction.

As shown in Fig. 10, it is confirmed that a sufficient amount of crystal grains set the (002) plane in a predetermined direction in the first example of the present embodiment as compared with any of the comparative examples. In addition, the coercivity *Hc* of 213.3 [kA/m] approximately was measured for the first example of the present embodiment. The product *tBr* between the residual magnetization *Br* and the thickness *t* was obtained at 4.3[µm•mT] approximately for the first example of the embodiment. On the other hand, the coercivity *Hc* of 102.7 [kA/m] approximately was measured for the first comparative example. The product *tBr* between the residual magnetization *Br* and the thickness *t* was obtained at 4.6[µm•mT] approximately for the first comparative example. The coercivity *Hc* of 102.7[kA/m] approximately was measured for the second comparative example. The product *tBr* between the residual magnetization *Br* and the thickness *t* was obtained at 5.0 [µm•mT] approximately for the second comparative example. The coercivity *Hc* of 173.8[kA/m] approximately was measured for the third comparative example. The product *tBr* between the residual magnetization *Br* and the thickness *t* was obtained at 5.2 [µm•mT] approximately for the third comparative example. The first example of the embodiment exhibits the largest coercivity *Hc* among the examples.

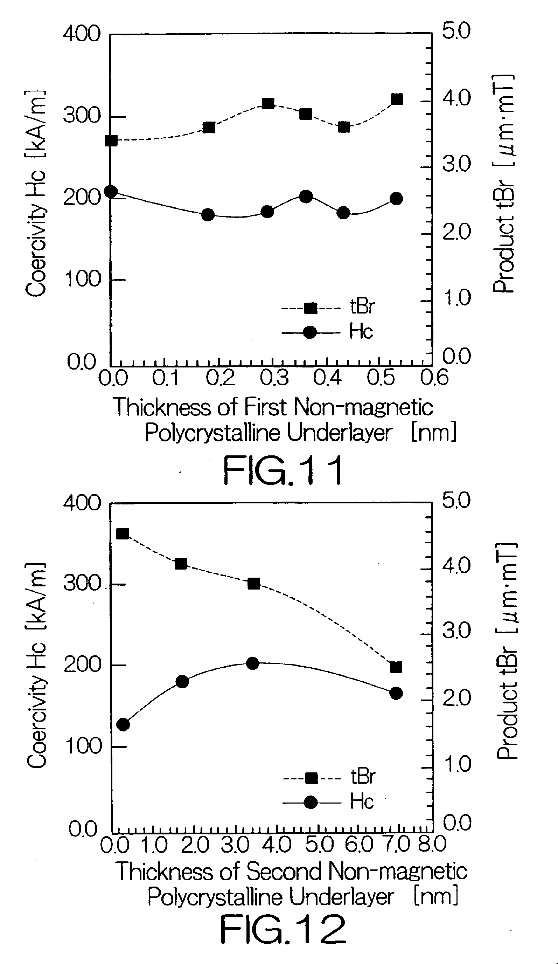

Next, the inventor prepared other examples of the embodiment in accordance with the aforementioned method. The inventor sequentially formed the MgO layer 42 of a thickness equal to 16.7nm, the ultrathin Ti layer 43, and the Ti layer 44 of a thickness equal to 3.6nm on the surface of the substrate 23 in these examples. A CoCrPt layer of a thickness equal to 7.5nm was formed on the surface of the Ti layer 44. The CoCrPt layer was subjected to heat treatment at 350 degrees Celsius for one minute. The inventor prepared a second example of the embodiment in this manner. Various thicknesses were was set for the Ti layers 43 of the second example. The inventor observed the coercivity *Hc* and the product *tBr* between the residual magnetization *Br* and the thickness *t* for the CoCrPt layers of the second examples. As is apparent from Fig. 11, all the second examples have higher values for the product *tBr* between the residual magnetization *Br* and the thickness *t*. The Ti layers 43 having a thickness in the range between 0.30nm and 0.36nm were preferable to obtain a superior coercivity *Hc* and product *tBr*.

Next, the inventor prepared further examples of the embodiment in accordance with the aforementioned method. The inventor sequentially formed the MgO layer 42 of a thickness equal to 16. 7nm, the Ti layer 43 of a thickness equal to 0. 36nm, and the Ti layer 44 of a predetermined thickness on the surface of the substrate 23 in these examples. A CoCrPt layer of a thickness equal to 7.5nm was formed on the surface of the Ti layer 44. The CoCrPt layer was subjected to heat treatment at 350 degrees Celsius for one minute. The inventor prepared third examples of the embodiment in this manner. Various thicknesses were set for the Ti layers 44 of the third examples. The inventor observed the coercivity *Hc* and the product *tBr* between the residual magnetization *Br* and the thickness *t* for the CoCrPt layers of the third examples. As is apparent from Fig. 12, the Ti layers 44 having a thickness in the range between 3.0nm and 4.0nm were preferable to obtain a superior coercivity *Hc* and product *tBr*.

Furthermore, the inventor examined the magnetic characteristics of the first and secondmagnetic polycrystalline layers 35, 36. The inventor formed a Ti layer of a thickness equal to 3.6nm on the surface of the substrate 23. A CoCrPt layer 45 of a thickness equal to 1.7nm and a CoCrPt layer 46 of a thickness equal to 5.8nm were sequentially formed on the surface of the Ti layer 44 in accordance with the aforementioned method. The inventor prepared a fourth example of the embodiment in this manner. The inventor observed the orientation of the crystal grains in the CoCrPt layers 45, 46 based on X-ray diffraction. The inventor prepared a fourth comparative example in this case. The inventor sequentially formed a Ti layer of a thickness equal to 3.6nm and a CoCrPt layer of a thickness equal to 7. 5nm on the surface of the substrate 23 through sputtering process. The CoCrPt layer was subjected to heat treatment at 350 degrees Celsius for one minute. The inventor likewise observed the orientation of the crystal grains in the CoCrPt layer based on X-ray diffraction.

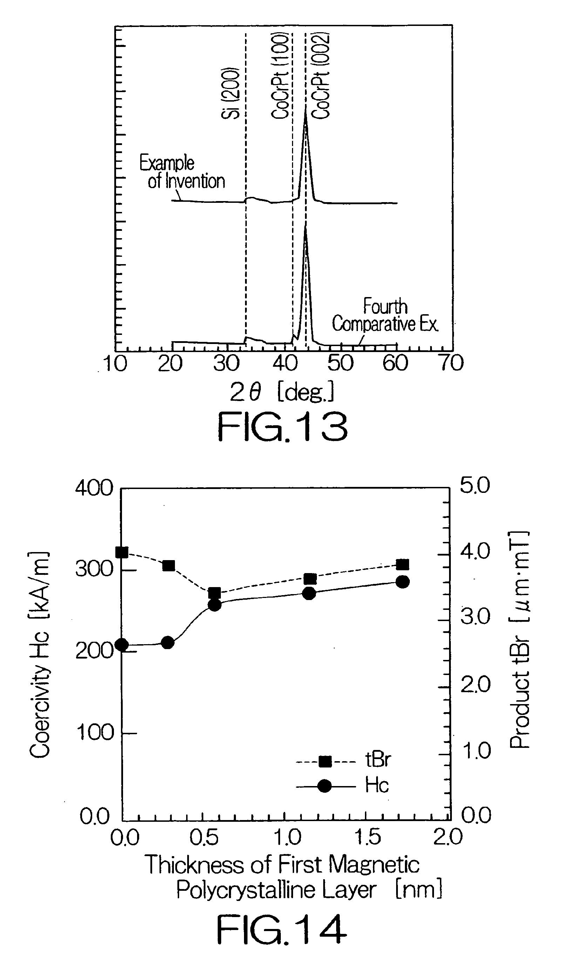

As shown in Fig. 13, it is confirmed that a sufficient amount of crystal grains set the (002) plane in a predetermined direction in the fourth example of the present embodiment as compared with the fourth comparative example. Emergence of the (001) plane was avoided. In addition, the coercivity *Hc* of 181.7[kA/m] approximately was measured for the fourth example of the present embodiment. The product *tBr* between the residual magnetization *Br* and the thickness *t* was obtained at 2.6[µm•mT] approximately for the fourth example of the embodiment. On the other hand, the coercivity *Hc* of 102. 7 [kA/m] approximately was measured for the fourth comparative example. The product *tBr* between the residual magnetization *Br* and the thickness *t* was obtained at 4. 7 [µm•mT] approximately for the fourth comparative example. The fourth example of the embodiment exhibits a superior coercivity *Hc* as compared with the fourth comparative example.

Next, the inventor prepared a fifth example of the present embodiment in accordance with the aforementioned method. The inventor sequentially formed the MgO layer 42 of a thickness equal to 16. 7nm, the Ti layer 43 of a thickness equal to 0.53nm, the Ti layer 44 of a thickness equal to 3. 6nm, the CoCrPt layer 45 of a predetermined thickness and the CoCrPt layer 46 of a thickness equal to 7.5nm on the surface of the substrate 23 in accordance with the aforementioned method. The CoCrPt layer 46 was subjected to heat treatment at 350 degrees Celsius for one minute. Various thicknesses were set for the CoCrPt layers 45 in the fifth example. The inventor measured the coercivity *Hc* and the product *tBr* between the residual magnetization *Br* and the thickness *t* for the CoCrPt layers 45, 46 of the fifth example. As is apparent from Fig. 14, the CoCrPt layer 45 of a thickness in a range between 0.5nm and 1. 7nm exhibits a superior coercivity *Hc* and product *tBr*.

Furthermore, the inventor examined the utility of the controlling layer 32, namely of the MgO layer 42. The inventor formed the MgO layer 42 of a thickness equal to 11.1nm on the surface of the substrate 23 in accordance with the aforementioned method. The Ti layer of a thickness equal to 3. 6nm was formed on the surface of the MgO layer 42. The CoCrPt layer 45 of a thickness equal to 1. 7nm and the CoCrPt layer 46 of a thickness equal to 5.8nm were formed on the surface of the Ti layer in accordance with the aforementioned method. The CoCrPt layer 46 was subjected to heat treatment at 350 degrees Celsius for one minute. The sixth example of the present embodiment was prepared in this manner. The orientation of the crystal grains was observed in the CoCrPt layers 45, 46 based on X-ray diffraction. The inventor also prepared a fifth comparative example in this case. A Ti layer of a thickness equal to 3.6nm was formed on the surface of the substrate 23. The MgO layer 42 was omitted. The CoCrPt layer 45 of a thickness equal to 1. 7nm and the CoCrPt layer 46 of a thickness equal to 5. 8nm were formed on the surface of the Ti layer in accordance with the aforementioned method. The CoCrPt layer 46 was subjected to heat treatment at 350 degrees Celsius for one minute. The orientation of the crystal grains was observed in the CoCrPt layer 46 based on the X-ray diffraction.

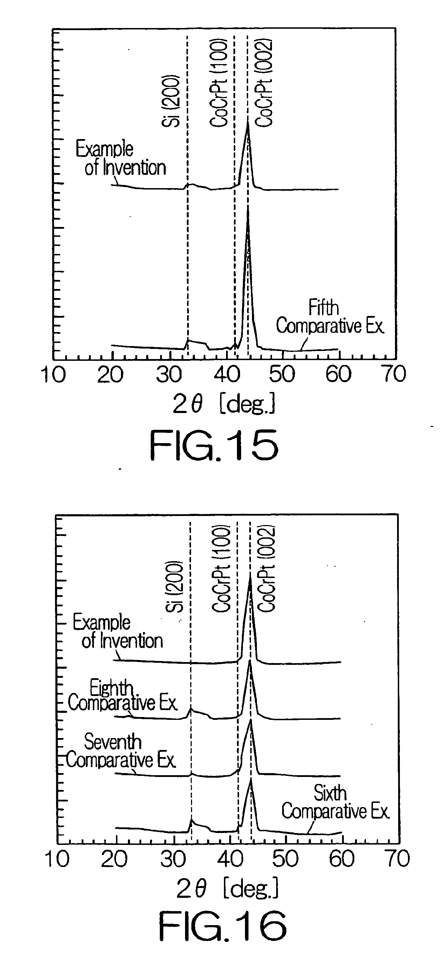

As shown in Fig. 15, it is confirmed that a sufficient amount of crystal grains set the (002) plane in a predetermined direction in the sixth example of the present embodiment as compared with the fifth comparative example. Emergence of the (001) plane was avoided. The utility of the MgO layer 42 was proven. In addition, the coercivity *Hc* of 181.7[kA/m] approximately was measured for the sixth example of the present embodiment. The product *tBr* between the residual magnetization *Br* and the thickness *t* was obtained at 3.3 [µm•mT] approximately for the sixth example of the embodiment. On the other hand, the coercivity *Hc* of 181.7 [kA/m] approximately was measured for the fifth comparative example. The product *tBr* between the residual magnetization *Br* and the thickness *t* was obtained at 2.6[µm•mT] approximately for the fifth comparative example. The sixth example of the embodiment exhibits a superior product *tBr* without reducing the coercivity *Hc* as compared with the fifth comparative example.

The inventor prepared a seventh example of the present embodiment in accordance with the aforementioned method. The inventor sequentially formed the MgO layer 42 of a thickness equal to 16.7nm, the Ti layer 43 of a thickness equal to 0.36nm, the Ti layer 44 of a thickness equal to 3.6nm, the CoCrPt layer 45 of a thickness equal to 0.59nm and the CoCrPt layer 46 of a thickness equal to 7.5nm on the surface of the substrate 23. The CoCrPt layer 46 was subjected to heat treatment at 350 degrees Celsius for one minute. The orientation of the crystal grains was observed in the CoCrPt layers 45, 46 based on X-ray diffraction.

In this case, the inventor prepared sixth to eighth comparative examples. The inventor sequentially formed the MgO layer 42 of a thickness equal to 16. 7nm, a Ti layer of a thickness equal to 3.6nm and a CoCrPt layer of a thickness equal to 7.5nm on the surface of the substrate 23 through sputtering process in the sixth comparative example. The CoCrPt layer was subjected to heat treatment at 350 degrees Celsius for one minute. The inventor sequentially formed the MgO layer 42 of a thickness equal to 16.7nm, the Ti layer 43 of a thickness equal to 0.36nm and the Ti layer 44 of a thickness equal to 3.6nm on the surface of the substrate 23 in accordance with the aforementioned method in the seventh comparative example. ACoCrPt layer of a thickness equal to 7.5nm was further formed on the surface of the Ti layer 44. The CoCrPt layer was subjected to heat treatment at 350 degrees Celsius for one minute. The inventor sequentially formed the MgO layer 42 of a thickness equal to 16.7nm and a Ti layer of a thickness equal to 3.6nm on the surface of the substrate 23 through sputtering process in the eighth comparative example. The inventor further formed the CoCrPt layer 45 of a thickness equal to 0. 59nm and the CoCrPt layer 46 of a thickness equal to 7.5nm on the surface of the Ti layer in accordance with the aforementioned method. The CoCrPt layer 46 was subjected to heat treatment at 350 degrees Celsius for one minute. The orientation of crystal grains was observed in the CoCrPt layers in the sixth to eighth comparative examples based on X-ray diffraction.

As shown in Fig. 16, it is confirmed that a sufficient amount of crystal grains set the (002) plane in a predetermined direction in the seventh example of the present embodiment as compared with any of the sixth to eighth comparative examples. In addition, the coercivity *Hc* of 237. 0 [kA/m] approximately was measured for the seventh example of the present embodiment. The product *tBr* between the residual magnetization *Br* and the thickness *t* was obtained at 4.6[µm•mT] approximately for the seventh example of the embodiment. On the other hand, the coercivity *Hc* of 213.3[kA/m] approximately was measured for the sixth comparative example. The product *tBr* between the residual magnetization *Br* and the thickness *t* was obtained at 3.4[µm•mT] approximately for the sixth comparative example. The coercivity *Hc* of 205. 4[kA/m] approximately was measured for the seventh comparative example. The product *tBr* between the residual magnetization *Br* and the thickness *t* was obtained at 3.8[µm•mT] approximately for the seventh comparative example. The coercivity *Hc* of 211. 7 [kA/m] approximately was measured for the eighth comparative example. The product *tBr* between the residual magnetization *Br* and the thickness *t* was obtained at 3.6[µm•mT] approximately for the eighth comparative example. The seventh example of the embodiment exhibits the largest coercivity *Hc* among the examples.

The axis of easy magnetization may be set in parallel with the surface of the substrate 23 in the aforementioned first and second magnetic polycrystalline layers 35, 36. The first magnetic polycrystalline layer 35 may be formed on the first and second non-magnetic polycrystalline underlayers 33, 34 in the aforementioned manner so as to establish the magnetic anisotropy. In these cases, the aforementioned method may be utilized to form the first and second magnetic polycrystalline layers 35, 36 and the first and second non-magnetic polycrystalline underlayers 33, 34.

A separation layer such as a SiO₂ layer may be formed between the soft magnetic underlayer 31 or FeTaC layer 41 and the first non-magnetic polycrystalline underlayer 33 or Ti layer 43 in place of the aforementioned controlling layer 32 or MgO layer 42 in the aforementioned magnetic recording disk 13. The separation layer serves to isolate the first non-magnetic polycrystalline layer 33 from the soft magnetic underlayer 31. As a result, the crystal grains can be aligned in a predetermined direction in the first non-magnetic polycrystalline layer 33 without the influence from the soft magnetic underlayer 31. Otherwise, a Ru layer may be employed as the first and second non-magnetic polycrystalline layers 33 , 34 in the aforementioned magnetic recording disk 13.

## Claims

1. A method of making a magnetic recording medium **characterized by** comprising:
depositing first atoms on a surface of a controlling layer, including crystal grains oriented in a predetermined direction, in a chamber;
keeping the chamber at room temperature during deposition of the first atoms;
subjecting the first atoms to heat treatment in the chamber after the deposition of the first atoms so as to form a first polycrystalline layer (33, 35) including crystal grains whose orientation is aligned in a predetermined direction, the first atoms being specific atoms or forming an alloy including Co and Cr;
depositing second atoms on a surface of the first polycrystalline layer (33, 35) in the chamber so as to form a second polycrystalline layer (34, 36) having a thickness larger than that of the first polycrystalline layer (33, 35), the second polycrystalline layer (34, 36) including crystal grains having grown from individual crystal grains of the first crystalline layer (33, 35) based on epitaxy, the second atoms being the specific atoms or forming the alloy including Co and Cr; and
keeping a vacuum condition in the chamber between the deposition of the first atoms and deposition of the second atoms.

2. The method according to claim 1, further comprising:
depositing third atoms on a surface of the second crystalline layer (34) in the chamber;
keeping the chamber at room temperature during deposition of the third atoms;
subjecting the third atoms to heat treatment after deposition of the third atoms so as to from a third crystalline layer (35);
depositing fourth atoms on a surface of the third polycrystalline layer (35) so as to forma fourth polycrystalline layer (36) having a thickness larger than that of the third polycrystalline layer (35), the fourth polycrystalline layer (36) includes crystal grains having grown from the individual crystal grains of the third crystalline layer (35) based on epitaxy, the third and fourth atoms forming an alloy including Co and Cr; and
maintaining a vacuum condition in the chamber between deposition of the third atoms and deposition of the fourth atoms;
wherein said third polycrystalline layer (35) includes crystal grains having grown from the individual crystal grains of the second crystalline layer (34) based on epitaxy.

3. The method according to claim 1 or 2, wherein the controlling layer is made of MgO.

4. A magnetic recording medium **characterized by** comprising:
a controlling layer (32) including crystal grains oriented in a predetermined direction;
a first non-magnetic polycrystalline layer (33) including crystal grains, consisting of Ti atoms, adjacent to each other on a surface of the controlling layer, an orientation of the crystal grains being aligned in a predetermined direction; and
a second non-magnetic polycrystalline layer (34) including crystal grains, consisting of Ti atoms, having grown from the individual crystal grains of the first non-magnetic polycrystalline layer (33) based on epitaxy, said second non-magnetic polycrystalline layer (34) extending on a surface of the first non-magnetic polycrystalline layer (33) with a thickness larger than that of the first non-magnetic polycrystalline layer (33).

5. The magnetic recording medium according to claim 4, further comprising a magnetic layer (35, 36) extending on a surface of the second polycrystalline layer (34).

6. The magnetic recording medium according to claim 5, wherein said magnetic layer (35, 36) has an axis of easy magnetization in a perpendicular direction perpendicular to the surface of the second non-magnetic polycrystalline layer (34).

7. The magnetic recording medium according to claim 5, wherein said magnetic layer (35, 36) includes:
a first magnetic polycrystalline layer (35) including crystal grains, made of an alloy including Co and Cr, adjacent to each other on the surface of the second non-magnetic polycrystalline layer (34); and
a second magnetic polycrystalline layer (36) including crystal grains, made of the alloy, having grown from the crystal grains of the first magnetic polycrystalline layer (35) based on epitaxy, said second magnetic polycrystalline layer (36) extending on a surface of the first magnetic polycrystalline layer (35) with a thickness larger than that of the first magnetic polycrystalline layer (35).

8. The magnetic recording medium according to claim 7, wherein said first and second magnetic polycrystalline layers (35, 36) have an axis of easy magnetization in a perpendicular direction perpendicular to the surface of the second non-magnetic polycrystalline layer (34).

9. The magnetic recording medium according to any one of claims 5 to 8, further comprising a soft magnetic underlayer (31) for receiving the controlling layer (32), said soft magnetic underlayer (31) having an axis of easy magnetization in a direction parallel to the surface of the second non-magnetic polycrystalline layer (34).

10. A magnetic recording medium comprising:
a non-magnetic polycrystalline underlayer (33, 34) including crystal grains whose orientation is aligned in a predetermined direction;
a first magnetic polycrystalline layer (35) including crystal grains, made of an alloy including Co and Cr, adjacent to each other on a surface of the non-magnetic polycrystalline underlayer (33, 34); and
a second magnetic polycrystalline layer (36) including crystal grains, made of the alloy, having grown from the crystal grains of the first magnetic polycrystalline layer (35) based on epitaxy, said second magnetic polycrystalline layer extending on a surface of the first magnetic polycrystalline layer (35) with a thickness larger than that of the first magnetic polycrystalline layer (35).

11. The magnetic recording medium according to claim 10, wherein said first and second magnetic polycrystalline layers (35, 36) have an axis of easy magnetization in a perpendicular direction perpendicular to the surface of the non-magnetic polycrystalline underlayer (33, 34).

12. The magnetic recording medium according to claim 11, further comprising:
a non-magnetic layer (32) for receiving said non-magnetic polycrystalline underlayer (33, 34); and
a soft magnetic underlayer (31) for receiving the non-magnetic layer (32), said soft magnetic underlayer (31) having an axis of easy magnetization in a direction parallel to the surface of the non-magnetic polycrystalline underlayer (33, 34).

## Patentansprüche

1. Verfahren zum Herstellen eines magnetischen Aufzeichnungsmediums, **dadurch gekennzeichnet, dass** es umtasst:
Abscheiden von ersten Atomen auf einer Oberfläche einer Steuerschicht, die in einer vorbestimmten Richtung orientierte Kristallkörner enthält, in einer Kammer;
Halten der Kammer während der Abscheidung der ersten Atome auf Raumtemperatur;
Unterziehen der ersten Atome einer Wärmebehandlung in der Kammer nach der Abscheidung der ersten Atome, um eine erste polykristalline Schicht (33, 35) zu bilden, die Kristallkörner enthält, deren Orientierung in einer vorbestimmten Richtung ausgerichtet ist, wobei die ersten Atome spezifische Atome sind oder eine Legierung bilden, die Co und Cr enthält;
Abscheiden von zweiten Atomen auf einer Oberfläche der ersten polykristallinen Schicht (33, 35) in der Kammer, um eine zweite polykristalline Schicht (34, 36) zu bilden, die eine Dicke hat, die größer als jene der ersten polykristallinen Schicht (33, 35) ist, welche zweite polykristalline Schicht (34, 36) Kristallkörner enthält, die aus individuellen Kristallkörnern der ersten kristallinen Schicht (33, 35) basierend auf Epitaxie gewachsen sind, wobei die zweiten Atome die spezifischen Atome sind oder die Legierung bilden, die Co und Cr enthält;
Beibehalten einer Vakuumbedingung in dcr Kammer zwischen der Abscheidung der ersten Atome und der Abscheidung der zweiten Atome.

2. Verfahren nach Anspruch 1, ferner mit:
Abscheiden von dritten Atomen auf einer Oberfläche der zweiten kristallinen Schicht (34) in der Kammer;
Halten der Kammer während der Abscheidung der dritten Atome auf Raumtemperatur;
Unterziehen der dritten Atome einer Wärmebehandlung nach der Abscheidung der dritten Atome, um eine dritte kristalline Schicht (35) zu bilden;
Abscheiden von vierten Atomen auf einer Oberfläche der dritten polykristallinen Schicht (35), um eine vierte polykristalline Schicht (36) zu bilden, die eine Dicke hat, die größer als jene der dritten polykristallinen Schicht (35) ist, welche vierte polykristalline Schicht (36) Kristallkörner enthält, die aus den individuellen Kristallkörnern der dritten kristallinen Schicht (35) basierend auf Epitaxie gewachsen sind, wobei die dritten und vierten Atome eine Legierung bilden, die Co und Cr enthält; und
Beibehalten einer Vakuumbedingung in der Kammer zwischen der Abscheidung der dritten Atome und der Abscheidung der vierten Atome;
bei dem die dritte polykristalline Schicht (35) Kristallkörner enthält, die aus den individuellen Kristallkörnern der zweiten kristallinen Schicht (34) basierend auf Epitaxie gewachsen sind.

3. Verfahren nach Anspruch 1 oder 2, bei dem die Steuerschicht aus MgO hergestellt ist.

4. Magnetisches Aufzeichnungsmedium, **dadurch gekennzeichnet, dass** es umfasst:
eine Steuerschicht (32), die in einer vorbestimmten Richtung orientierte Kristallkörner enthält;
eine erste nichtmagnetische polykristalline Schicht (33), die Kristallkörner enthält, die aus Ti-Atomen sind und auf einer Oberfläche der Steuerschicht aneinandergrenzen, wobei eine Orientierung der Kristallkörner in einer vorbestimmten Richtung ausgerichtet ist; und
eine zweite nichtmagnetische polykristalline Schicht (34), die Kristallkörner enthält, die aus Ti-Atomen sind und aus den individuellen Kristallkörnern der ersten nichtmagnetischen polykristallinen Schicht (33) basierend auf Epitaxie gewachsen sind, welche zweite nichtmagnetische polykristalline Schicht (34) sich auf einer Oberfläche der ersten nichtmagnetischen polykristallinen Schicht (33) mit einer Dicke erstreckt, die größer als jene der ersten nichtmagnetischen polykristallinen Schicht (33) ist.

5. Magnetisches Aufzeichnungsmedium nach Anspruch 4, ferner mit einer magnetischen Schicht (35, 36), die sich auf einer Oberfläche der zweiten polykristallinen Schicht (34) erstreckt.

6. Magnetisches Aufzeichnungsmedium nach Anspruch 5, bei dem die magnetische Schicht (35, 36) eine Achse der leichten Magnetisierung in einer senkrechten Richtung hat, die zu der Oberfläche der zweiten nichtmagnetischen polykristallinen Schicht (34) senkrecht ist.

7. Magnetisches Aufzeichnungsmedium nach Anspruch 5, bei dem die magnetische Schicht (35, 36) enthält:
eine erste magnetische polykristalline Schicht (35), die Kristallkörner enthält, die aus einer Legierung sind, die Co und Cr enthält, und auf der Oberfläche der zweiten nichtmagnetischen polykristallinen Schicht (34) aneinandergrenzen; und
eine zweite magnetische polykristalline Schicht (36), die Kristallkörner enthält, die aus der Legierung sind und aus den Kristallkörnern der ersten magnetischen polykristallinen Schicht (35) basierend auf Epitaxie gewachsen sind, welche zweite magnetische polykristalline Schicht (36) sich auf einer Oberfläche der ersten magnetischen polykristallinen Schicht (35) mit einer Dicke erstreckt, die größer als jene der ersten magnetischen polykristallinen Schicht (35) ist.

8. Magnetisches Aufzeichnungsmedium nach Anspruch 7, bei dem die ersten und zweiten magnetischen polykristallinen Schichten (35, 36) eine Achse der leichten Magnetisierung in einer senkrechten Richtung haben, die zu der Oberfläche der zweiten nichtmagnetischen polykristallinen Schicht (34) senkrecht ist.

9. Magnetisches Aufzeichnungsmedium nach einem der Ansprüche 5 bis 8, ferner mit einer weichmagnetischen Unterschicht (31) zum Aufnehmen der Steuerschicht (32), welche weichmagnetische Unterschicht (31) eine Achse der leichten Magnetisierung in einer Richtung hat, die zu der Oberfläche der zweiten nichtmagnetischen polykristallinen Schicht (34) parallel ist.

10. Magnetisches Aufzeichnungsmedium mit:
einer nichtmagnetischen polykristallinen Unterschicht (33, 34), die Kristallkörner enthält, deren Orientierung in einer vorbestimmten Richtung ausgerichtet ist;
einer ersten magnetischen polykristallinen Schicht (35), die Kristallkörner enthält, die aus einer Legierung sind, die Co und Cr enthält und auf einer Oberfläche der nichtmagnetischen polykristallinen Unterschicht (33, 34) aneinandergrenzen; und
einer zweiten magnetischen polykristallinen Schicht (36), die Kristallkörner enthält, die aus der Legierung sind und aus den Kristallkörnern der ersten magnetischen polykristallinen Schicht (35) basierend auf Epitaxie gewachsen sind, welche zweite magnetische polykristalline Schicht sich auf einer Oberfläche der ersten magnetischen polykristallinen Schicht (35) mit einer Dicke erstreckt, die größer als jene der ersten magnetischen polykristallinen Schicht (35) ist.

11. Magnetisches Aufzeichnungsmedium nach Anspruch 10, bei dem die ersten und zweiten magnetischen polykristallinen Schichten (35, 36) eine Achse der leichten Magnetisierung in einer senkrechten Richtung haben, die zu der Oberfläche der nichtmagnetischen polykristallinen Unterschicht (33, 34) senkrecht ist.

12. Magnetisches Aufzeichnungsmedium nach Anspruch 11, ferner mit:
einer nichtmagnetischen Schicht (32) zum Aufnehmen der nichtmagnetischen polykristallinen Unterschicht (33, 34); und
einer weichmagnetischen Unterschicht (31) zum Aufnehmen der nichtmagnetischen Schicht (32), welche weichmagnetische Unterschicht (31) eine Achse der leichten Magnetisierung in einer Richtung hat, die zu der Oberfläche der nichtmagnetischen polykristallinen Unterschicht (33, 34) parallel ist.

## Revendications

1. Procédé de production d'un support d'enregistrement magnétique **caractérisé en ce qu'**il comprend :
déposer des premiers atomes sur une surface d'une couche de contrôle, incluant des grains cristallins orientés dans une direction prédéterminée, dans une chambre;
maintenir la chambre à la température ambiante pendant le dépôt des premiers atomes;
soumettre les premiers atomes à un traitement thermique dans la chambre après le dépôt des premiers atomes de manière à former une première couche polycristalline (33, 35) incluant des grains cristallins dont l'orientation est alignée dans une direction prédéterminée, les premiers atomes étant des atomes spécifiques ou formant un alliage incluant Co et Cr ;
déposer des seconds atomes sur une surface de la première couche polycristalline (33, 35) dans la chambre de manière à former une seconde couche polycristalline (34, 36) ayant une épaisseur supérieure à celle de la première couche polycristalline (33, 35), la seconde couche polycristalline (34, 36) incluant des grains cristallins ayant crû depuis des grains cristallins individuels de la première couche polycristalline (33, 35) sur la base de l'épitaxie, les seconds atomes étant les atomes spécifiques ou formant l'alliage incluant Co et Cr; et
maintenir des conditions de vide dans la chambre entre le dépôt des premiers atomes et le dépôt des seconds atomes.

2. Procédé selon la revendication 1 comprenant en outre :
déposer des troisièmes atomes sur une surface de la seconde couche cristalline (34) dans la chambre ;
maintenir la chambre à la température ambiante pendant le dépôt des troisièmes atomes ;
soumettre les troisièmes atomes à un traitement thermique après le dépôt des troisièmes atomes de manière à former une troisième couche cristalline (35) ;
déposer des quatrièmes atomes sur une surface de la troisième couche polycristalline (35) de manière à former une quatrième couche polycristalline (36) ayant une épaisseur supérieure à celle de la troisième couche polyscristalline (35), la quatrième couche polycristalline (36) inclut des grains cristallins ayant crû depuis les grains cristallins individuels de la troisième couche cristalline (35) sur la base de l'épitaxie, les troisièmes et quatrièmes atomes formant un alliage incluant Co et Cr; et
maintenir des conditions de vide dans la chambre entre le dépôt des troisièmes atomes et le dépôt des quatrièmes atomes ;
où ladite troisième couche polycristalline (35) inclut des grains cristallins ayant crû depuis les grains cristallins individuels de la seconde couche cristalline (34) sur la base de l'épitaxie.

3. Procédé selon la revendication 1 ou 2 où la couche de contrôle est en MgO.

4. Support d'enregistrement magnétique **caractérisé en ce qu'**il comprend :
une couche de contrôle (32) incluant des grains cristallins orientés dans une direction prédéterminée;
une première couche polycristalline non magnétique (33) incluant des grains cristallins, consistant en atomes de Ti, adjacents les uns aux autres sur une surface de la couche de contrôle, une orientation des grains cristallins étant alignée dans une direction prédéterminée ; et
une seconde couche polycristalline non magnétique (34) incluant des grains cristallins, consistant en atomes de Ti, ayant crû depuis les grains cristallins individuels de la première couche polycristalline non magnétique (33) sur la base de l'épitaxie, ladite seconde couche polycristalline non magnétique (34) s'étendant sur une surface de la première couche polycristalline non magnétique (33) avec une épaisseur supérieure à celle de la première couche polycristalline non magnétique (33).

5. Support d'enregistrement magnétique selon la revendication 4 comprenant en outre une couche magnétique (35, 36) s'étendant sur une surface de la seconde couche polycristalline (34).

6. Support d'enregistrement magnétique selon la revendication 5 où ladite couche magnétique (35, 36) a un axe d'aimantation aisée dans une direction perpendiculaire perpendiculaire à la surface de la seconde couche polycristalline non magnétique (34).

7. Support d'enregistrement magnétique selon la revendication 5 où ladite couche magnétique (35, 36) inclut :
une première couche polycristalline magnétique (35) incluant des grains cristallins, en un alliage incluant Co et Cr, adjacents les uns aux autres sur la surface de la seconde couche polycristalline non magnétique (34) ; et
une seconde couche polycristalline magnétique (36) incluant des grains cristallins, en l'alliage, ayant crû depuis les grains cristallins de la première couche polycristalline magnétique (35) sur la base de l'épitaxie, ladite seconde couche polycristalline magnétique (36) s'étendant sur une surface de la première couche polycristalline magnétique (35) avec une épaisseur supérieure à celle de la première couche polycristalline magnétique (35).

8. Support d'enregistrement magnétique selon la revendication 7 où lesdites première et seconde couches polycristallines magnétiques (35, 36) ont un axe d'aimantation aisée dans une direction perpendiculaire perpendiculaire à la surface de la seconde couche polycristalline non magnétique (34).

9. Support d'enregistrement magnétique selon l'une quelconque des revendications 5 à 8 comprenant en outre une sous-couche magnétique douce (31) pour recevoir la couche de contrôle (32), ladite sous-couche magnétique douce (31) ayant un axe d'aimantation aisée dans une direction parallèle à la surface de la seconde couche polycristalline non magnétique (34).

10. Support d'enregistrement magnétique comprenant :
une sous-couche polycristalline non magnétique (33, 34) incluant des grains cristallins dont l'orientation est alignée dans une direction prédéterminée;
une première couche polyscristalline magnétique (35) incluant des grains cristallins, en un alliage incluant Co et Cr, adjacents les uns aux autres sur une surface de la sous-couche polycristalline non magnétique (33, 34) ; et
une seconde couche polyscristalline magnétique (36) incluant des grains cristallins, en l'alliage, ayant crû depuis les grains cristallins de la première couche polycristalline magnétique (35) sur la base de l'épitaxie, ladite seconde couche polycristalline magnétique s'étendant sur une surface de la première couche polycristalline magnétique (35) avec une épaisseur supérieure à celle de la première couche polycristalline magnétique (35).

11. Support d'enregistrement magnétique selon la revendication 10 où lesdites première et seconde couches polycristallines magnétiques (35, 36) ont un axe d'aimantation aisée dans une direction perpendiculaire perpendiculaire à la surface de la sous-couche polycristalline non magnétique (33, 34).

12. Support d'enregistrement magnétique selon la revendication 11 comprenant en outre :
une couche non magnétique (32) pour recevoir ladite sous-couche polycristalline non magnétique (33, 34) ; et
une sous-couche magnétique douce (31) pour recevoir la couche non magnétique (32), ladite sous-couche magnétique douce (31) ayant un axe d'aimantation aisée dans une direction parallèle à la surface de la sous-couche polycristalline non magnétique (33, 34).
